# NEUE EUROPÄISCHE PATENTSCHRIFT

(11) **EP 2 340 514 B2**
(45) Veröffentlichungstag und Bekanntmachung des Hinweises auf die Entscheidung über den Einspruch: **09.11.2016**
(45) Hinweis auf die Patenterteilung: 15.08.2012
(21) Anmeldenummer: 09744339.4
(22) Anmeldetag: 27.10.2009
(51) Int. Cl.: G06K 19/14, B42D 15/00

(54) **DATENTRÄGER UND VERFAHREN ZU DESSEN HERSTELLUNG**
DATA STORAGE DEVICE AND METHOD FOR PRODUCTION THEREOF
SUPPORT DE DONNÉES ET PROCÉDÉ DE FABRICATION DE CELUI-CI

(30) Priorität: 28.10.2008 DE 102008053582
(43) Veröffentlichungstag der Anmeldung: 06.07.2011
(73) Patentinhaber: Giesecke & Devrient GmbH, 81677 München (DE)
(72) Erfinder: SALZER, Tobias, 82008 Unterhaching (DE)
(74) Vertreter: Branzka, Thomas
(86) Internationale Anmeldenummer: PCT/EP2009/007676
(87) Internationale Veröffentlichungsnummer: WO 2010/049124

(56) Entgegenhaltungen:
- EP-A1- 1 886 834
- EP-A1- 1 886 834
- DE-A1- 10 048 812
- DE-A1- 10 232 786
- DE-A1- 19 934 434
- DE-A1-102005 062 828
- DE-B3-102006 008 345
- US-A1- 2006 196 948
- R. L. VAN RENESSE: 'Optical Document Security', Bd. 3, 2005, ARTECH HOUSE, BOSTON - LONDON Seiten 63 - 95
- EMV`96 - Integrated Circuit Card Application Specification for Payment Systems -Version 3.1.1. 31 Mai 1998

## Beschreibung

Die Erfindung betrifft einen kartenförmigen tragbaren Datenträger, insbesondere einen elektronischen Datenträger wie eine Chipkarte oder dergleichen, sowie ein Verfahren zur Herstellung des Datenträgers. Chipkarten und andere kartenförmige Datenträger mit sicherheitsrelevanten Daten werden mit zahlreichen Sicherheitsmerkmalen ausgestattet, um das Fälschen der Datenträger zu erschweren. Solche Sicherheitsmerkmale können visuell erkennbare Merkmale, so genannte Humanmerkmale, oder maschinenlesbare Merkmale sein, oder Merkmale, die beides in sich vereinen.

In diesem Zusammenhang ist der Einsatz lumineszierender Substanzen hinlänglich bekannt. So offenbart beispielsweise die EP-B-1 222 620 transparente Karten mit im Kartenkörper eingelagerten Stoffen, die sowohl maschinenlesbar als auch optisch erkennbar sind und beispielsweise UV-Fluoreszenz oder IR-Fluoreszenz aufweisen können. US-A-2006/0196948 offenbart mehrschichtige, lichtdurchlässige Karten mit Stoffen, welche bei Bestrahlung mit UV-Licht fluoreszieren und welche als Muster, alphanumerischer Text, Logos, Symbole, Graphiken oder andere Zeichen vorgesehen werden. Dazu sind die Stoffe in entsprechender Gestaltung beispielsweise aufgedruckt. Darüber hinaus können solche Stoffe auch in dem Kartenmaterial dispergiert sein.

Aufgabe der vorliegenden Erfindung ist es, einen kartenförmigen tragbaren Datenträger mit fluoreszierendem Sicherheitsmerkmal sicherheitstechnisch weiterzubilden und ein zur Herstellung eines solchen Datenträgers geeignetes Verfahren anzugeben. Die Erfindung betrifft einen kartenförmigen tragbaren Datenträger gemäß Anspruch 1 und ein Verfahren gemäß Anspruch 11.

Die Erfindung sieht vor, durch UV- und/oder IR-Bestrahlung zur Lumineszenz anregbares transluzentes Material in eine oder mehrere Aussparungen einer Schicht des Datenträgers einzubringen, welche zu eben diesem Zweck in der Schicht erzeugt wurden. Dementsprechend bilden die Aussparungen in der Schicht vorzugsweise ein graphisches Muster, insbesondere alphanumerische Zeichen, Logos oder anderer Symbole und Graphiken.

Das lumineszierende Sicherheitsmerkmal bietet gegenüber den herkömmlichen lumineszierenden Sicherheitsmerkmalen mehrere sicherheitsrelevante Vorteile. Einerseits wirken die mit dem lumineszierenden Material gefüllten Aussparungen wie eine Intarsienarbeit. Das Sicherheitsmerkmal ist somit auffällig und daher als visuell prüfbares Sicherheitsmerkmal besonders geeignet. Andererseits ist der technische Aufwand zur Herstellung des Sicherheitsmerkmals relativ hoch, so daß das Nachahmen erschwert wird.

Die visuelle Überprüfbarkeit des Sicherheitsmerkmals kann qualitativ weiter erhöht werden, wenn die zur Lumineszenz anregbaren Bestandteile des in die Aussparung gefüllten Materials so gewählt sind, daß sie im Falle ihrer Anregung im sichtbaren Spektralbereich lumineszieren. Diese Lumineszenz lässt sich, insbesondere in einem abgedunkelten Raum, auch visuell leicht überprüfen. Anderenfalls wäre die Überprüfung der Lumineszenz lediglich maschinell möglich.

Lumineszierende Stoffe mit der Eigenschaft, im sichtbaren und/oder unsichtbaren zu lumineszieren, sind dem Fachmann vielfach bekannt. Dabei kann es sich sowohl um Fluoreszenz- als auch um Phosphoreszenzerscheinungen handeln. Vorzugsweise handelt es sich um Lumineszenzstoffe, die mit Strahlung aus dem nahen IR-Bereich (NIR), also im Bereich von 870 bis 1400 nm, oder aus dem nahen UV-Bereich (NUV), also im Bereich von 200 bis 400 nm, anregbar sind.

Gemäß einer besonders bevorzugten Ausgestaltung der Erfindung durchdringen die Aussparungen die Datenträgerschicht, in der sie vorgesehen sind, vollständig. Dies bietet einerseits herstellungstechnische Vorteile bei der Erzeugung der Aussparungen in der Schicht, da sie in einfacher Weise aus der Schicht ausgestanzt, ausgeschnitten oder in einer anderen geeigneten Weise erzeugt werden können. Andererseits kann das Sicherheitsmerkmal dann als Durchsicht-Sicherheitsmerkmal dienen, da das in die Aussparungen eingebrachte Material selbst transparent oder zumindest transluzent ist.

Um einen möglichst auffälligen Effekt zu erzielen, ist das in die Aussparungen gefüllte Material für sichtbares Licht vollständig oder zumindest nahezu transparent, mit einem Transmissionsgrad von über 90%.

Die Auffälligkeit des Sicherheitsmerkmals kann weiter dadurch erhöht werden, daß die Schicht, in der die Aussparungen vorgesehen sind, bei Betrachtung im Durchlicht opak ist. Insbesondere besteht diese Schicht aus einem Material, welches durch und durch opak ist. Besteht die Schicht mit den Aussparungen selbst aus mehreren Schichten, so sind daher vorzugsweise alle Schichten opak. Der "Intarsieneffekt" wird dadurch besonders auffällig.

Es kann schon aus herstellungstechnischen Gründen vorteilhaft sein, die die Aussparungen aufweisende Schicht mit einer weiteren Schicht zu hinterlegen, die jedenfalls im Bereich der Aussparungen durchgehend ist. Diese weitere Schicht kann dann im Bereich der Aussparungen einen Boden für die Aussparungen bilden, so daß die Aussparungen in einfacher Weise mit dem lumineszenzfähigen Material befüllbar sind. Dabei kann der die Aussparungen abdeckende Bereich der weiteren Schicht opak sein, insbesondere dunkelfarbig bis schwarz, um einen Hintergrund zu schaffen, vor dem die Lumineszenz auffällig wird. Im Falle des bevorzugten DurchsichtsSicherheitsmerkmals ist es allerdings bevorzugt, daß die weitere Schicht zumindest im Bereich der Aussparungen vollständig oder nahezu vollständig transparent, ist.

Darüber hinaus kann es vorteilhaft sein, die Aussparungen zusätzlich zu der rückseitigen Abdeckung auch auf ihrer Vorderseite mit einer weiteren Schicht abzudecken. Die vorderseitige Deckschicht ist wiederum vorzugsweise zumindest im Bereich der Aussparungen transluzent, vorzugsweise vollständig oder nahezu vollständig transparent, so daß das lumineszenzfähige Material dadurch hindurch erkennbar bleibt.

Das lumineszenzfähige Material kann in die Aussparungen vorteilhaft als Klebstoff eingebracht werden, der zunächst hoch viskos ist und anschließend vernetzt. Vorzugsweise werden hier strahlungsaktivierbare Klebstoffe verwendet, beispielsweise Klebstoffe die durch UV-Bestrahlung härtbar sind.

Nach Befüllen der Aussparungen mit dem lumineszenzfähigen Material wird die die Aussparung aufweisende Schicht mit der Unterzugsfolie und der gegebenenfalls zusätzlich vorgesehenen Deckschicht in einem Laminierschritt fest miteinander verbunden, vorzugsweise unter Anwendung von Druck und Temperatur. Das gesamte Verfahren lässt sich so ohne weiteres automatisieren.

Das Dosieren des flüssigen Klebstoffs in die Aussparungen ist allerdings kritisch. Die Aussparungen sollten möglichst vollständig gefüllt sein, was aber bereits bei geringfügiger Überdosierung zum Überlaufen der Aussparungen führen kann, wenn nicht bereits beim Befüllen dann gegebenenfalls beim späteren Laminieren. Der Klebstoff kann dann zwischen die die Aussparungen aufweisende Schicht und die daran angrenzenden Schichten fließen. Um ein dadurch verursachtes negatives Erscheinungsbild zu vermeiden, sieht die Erfindung vor, über der die Aussparungen aufweisenden Schicht eine opake Schicht anzuordnen, die nicht-opake Bereiche über den Aussparungen aufweisen, um etwaige Füllmaterialverschmierungen zu verdecken. Je nach dem, ob die Aussparungen nur von einer Seite zu sehen sind oder im Falle eines Durchsichtssicherheitsmerkmals von beiden Seiten des Datenträgers zu sehen sind, wird diese opake Schicht nur zu einer oder zu jeder Seite der die Aussparungen aufweisenden Schicht vorgesehen. Der nicht-opake Bereich der opaken Schicht ist in seinen Abmessungen kleiner als die Aussparungen, so daß die Randkante der Aussparungen und die außerhalb der Randkante liegenden Bereiche der die Aussparungen aufweisenden Schicht in jedem Falle durch die opake Schicht verdeckt ist. Ein Betrachter sieht dann durch die nicht-opaken Konturen der opaken Schicht oder Schichten hindurch auf das durch die Aussparungen gebildete Muster, und eventuelle Füllmaterialverschmierungen liegen unter den opaken Teilen der opaken Schicht unsichtbar verborgen.

Es können auch elektronische Bauelemente in den Datenträger integriert werden oder auch nachträglich eingebracht werden, beispielsweise ein Chip, ein Display, gedruckte Leiterbahnstrukturen, Antennenstrukturen, Batterien und dergleichen mehr. Insbesondere kann die die Aussparungen aufweisende Schicht selbst mehrschichtig aufgebaut sein und den Kartenkörper als solchen oder eine Kernschicht eines Kartenkörpers bilden.

Gemäß einer besonders bevorzugten Ausgestaltung der Erfindung enthält das fluoreszenzfähige Material lasersensible Stoffe, die es ermöglichen, das lasersensible Material nachträglich mittels Laserstrahlung zu beschriften. Derartige Stoffe oder Stoffkombinationen sind dem Fachmann hinlänglich bekannt. Der vorliegend erzielbare Vorteil besteht darin, daß die Laserschrift in einem optisch auffälligen und technisch nur unter Aufwand nachahmbaren Material erzeugt wird und somit sicherheitstechnische Vorteile bietet.

Die begleitenden Zeichnungen zeigen:
- Figur 1: perspektivisch einen kartenförmigen Datenträger,
- Figur 2A bis 2E: Verfahrensschritte zur Herstellung eines kartenförmigen Datenträgers, und
- Figur 3: schematisch im Querschnitt einen erfindungsgemäßen, kartenförmigen Datenträger.

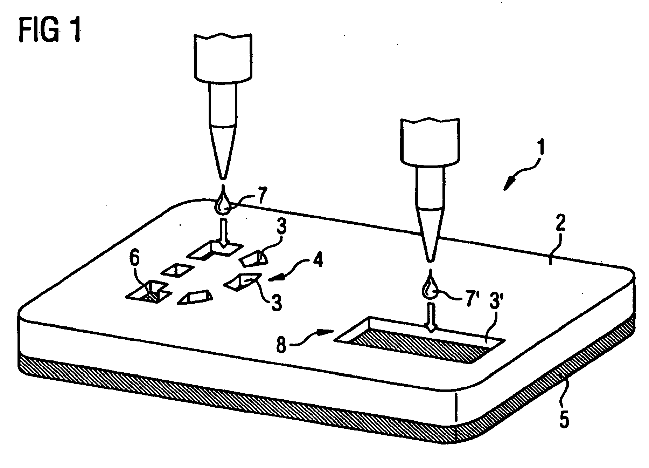

Figur 1 zeigt einen kartenförmigen Datenträger in perspektivischer Ansicht. Der Datenträger 1 umfaßt hier zwei Schichten, nämlich eine erste Schicht 2 mit Aussparungen 3 in Gestalt eines graphischen Musters 4. Die Unterseite der Schicht 2 ist mit einer Unterzugsfolie 5 vollflächig abgedeckt, so daß sie für die Aussparungen 3 einen Boden 6 bildet. Die Aussparungen 3 werden mit einem transluzenten, vorzugsweise transparenten Material 7 gefüllt.

Vorzugsweise, und hiervon wird im folgenden stets ausgegangen, handelt es sich bei dem Material 7 um einen transluzenten oder transparenten Kleber, der Substanzen enthält, die durch UV- und/ oder IR-Bestrahlung zur Lumineszenz anregbar sind.

Eine weitere Aussparung 3' in Form eines großformatigen, hier rechteckig ausgebildeten Feldes 8 wird ebenfalls mit einem derartigen Kleber 7' gefüllt, der jedoch als wesentlichen weiteren Bestandteil lasersensible Additive umfaßt, um zu einem späteren Zeitpunkt Informationen, insbesondere Daten zur Personalisierung der Karte, mittels Laserstrahlung darin einschreiben zu können. Das Material 7, 7' ist für sichtbare Strahlung im wesentlichen transparent, absorbiert jedoch zumindest in dem zur Anregung der Lumineszenz notwendigen, unsichtbaren Spektralbereich (UV/IR) und absorbiert im Falle des Materials 7' zumindest auch in einem für die Laserbeschriftung spezifizierten Spektralbereich, der von den Eigenschaften der dazu eingesetzten lasersensiblen Additive abhängt.

Die Unterzugsfolie 5 ist opak. Sie kann aber ohne weiteres auch transparent sein und ist dies jedenfalls im Bereich des graphischen Musters 4 für den Fall, daß das graphische Muster 4 im Durchlicht erkennbar sein soll. Die die Aussparungen 3, 3' aufweisende Schicht 2 ist opak, um eine Intarsienwirkung der mit dem fluoreszenzfähigen Material 7, 7' gefüllten Aussparungen 3, 3' zu verstärken.

Der Datenträger gemäß Figur 1 hat die Norm-Abmessungen gemäß ISO 7810, insbesondere als ID-1 Format. Die in Figur 1 dargestellte Schichtanordnung kann alternativ nur einen Teil der Gesamtdicke einer Norm-Karte betragen und demzufolge als Halbzeug für die Herstellung eines endgültigen Datenträgers dienen. Beispielsweise kann auf die in Figur 1 dargestellte Schichtanordnung eine Deckschicht aufgebracht werden, ggf. auch mehrere, um den Datenträger zu vervollständigen. Diese Deckschicht ist dann zumindest im Bereich der Aussparungen 3,3' transparent und kann im übrigen beispielsweise opak bedruckt sein. In einer solchen Karte bildet die Schicht 2 mit den Aussparungen 3 eine Kartenkernschicht. Die Kartenkernschicht kann ihrerseits mehrschichtig sein und elektronische Bauelemente enthalten oder weitere Aussparungen zum späteren Einsetzen solcher Bauelemente aufweisen (hier nicht explizit dargestellt). Insbesondere kann es sich bei der Karte bzw. der aus dem Schichtaufbau herzustellenden Karte um eine Chipkarte zur kontaktbehafteten und/ oder kontaktlosen Datenübertragung handeln.

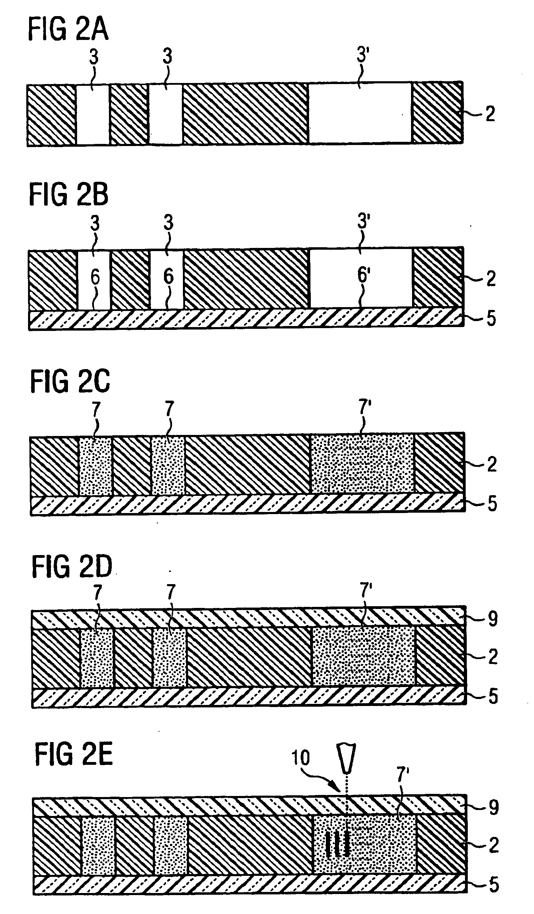

Figur 2 zeigt beispielhaft ein Verfahren zur Herstellung des vorbeschriebenen Datenträgers mit einer (gegebenenfalls mehrschichtigen) Kartenkernschicht 2 sowie einer Unterzugsfolie 5 und einer Deckfolie 9 auf einander gegenüberliegenden Oberflächen der Kernschicht 2. Zunächst werden in der Kernschicht 2 Aussparungen 3 und 3' beispielsweise durch Stanzen erzeugt (Figur 2A). Anschließend werden die Aussparungen 3, 3' mittels einer auf der Unterseite der Kernschicht 2 fixierten Unterzugsfolie 5 so verschlossen, daß die Unterzugsfolie 5 in den Aussparungen 3,3' jeweils einen Boden 6 bzw. 6' bildet (Figur 2B). Die Unterzugsfolie 5 kann dazu beispielsweise durch Anbringen mehrerer Schweißpunkte mit der Kernschicht 2 provisorisch verbunden werden.

Die Aussparungen 3, 3' werden anschließend mit dem transparenten Kleber 7, 7' vorzugsweise vollständig gefüllt, welche die zur sichtbaren und/ oder unsichtbaren Lumineszenz anregbaren Substanzen und gegebenenfalls weitere Substanzen enthalten, wie im Falle der lasersensiblen Additive des Materials 7' (Figur 2C). Der Klebstoff ist zunächst flüssig und kann selbstaushärtend sein. Vorzugsweise wird ein Kleber verwendet, der durch Bestrahlung, insbesondere UV-Bestrahlung, härtbar ist.

Der zuvor beschriebene Schichtaufbau wird abschließend mit einer Deckschicht 9 abgedeckt. Zu diesem Zeitpunkt kann der Klebstoff bereits soweit vernetzt sein, daß er eine gummi- oder gallertartige Konsistenz erlangt hat. Die Deckfolie 9 kann zunächst vorfixiert werden, bevor die Gesamtstruktur in einem abschließenden Laminierprozess zu einem festen Schichtverbund zusammengefügt wird. Dabei kann der Klebstoff 7, 7' nochmals verpreßt werden.

In einem optionalen weiteren Verfahrensschritt können Teilbereiche des Materials 7' mittels Laserstrahlung 10 selektiv geschwärzt werden und sind dann aufgrund der Transparenz des Materials 7' und der Transparenz zumindest einer der beiden Schichten 2, 9 für einen Betrachter sichtbar.

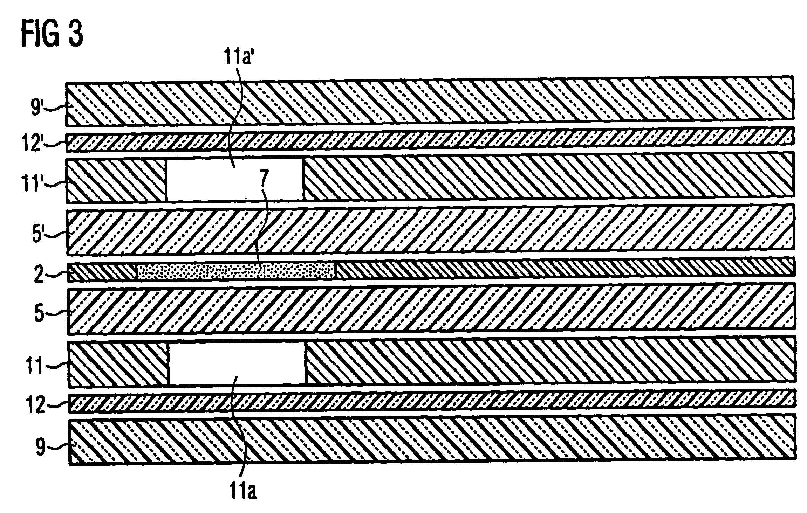

Figur 3 zeigt schematisch im Querschnitt einen kartenförmigen Datenträger gemäß einem Ausführungsbeispiel der Erfindung, wobei die einzelnen Schichten jeweils getrennt übereinander dargestellt sind. Eine zentral angeordnete Folie 2 mit einer Ausstanzung, die wiederum mit dem bereits beschriebenen Kleber 7 (oder 7') gefüllt ist, ist beidseitig durch transparente Folien 5 und 5' abgedeckt. Beim Füllen der Aussparung mit dem Kleber 7 oder im anschließenden Laminierprozeß kann es vorkommen, daß der Kleber 7 aus der Aussparung austritt und sich zwischen der Folie 2 und den beiden transparenten Folien 5,5' ausbreitet. Um diesen unerwünschten Effekt zu kaschieren, sind zu jeder Seite der zentralen Schicht 2 auf den transparenten Folien 5, 5' opake Sichtschutzfolien 11, 11' vorgesehen, die in einem Bereich 11a, 11a' nicht opak sind. Die nicht opaken Bereiche 11a, 11a' sind hier in einfacher Weise durch eine Stanzung hergestellt worden. Alternativ kann die Sichtschutzfolie 11, 11' beispielsweise aus einem transparenten Material bestehen, welches opak beschichtet oder bedruckt ist, jedoch nicht in den nicht-opaken Bereichen 11a, 11a'. Weitere transparente Folien sind hier jeweils außenseitig vorgesehen, nämlich eine transparente Overlay-Folie 9, 9', die gegebenenfalls ein spezielles Design aufweist, sowie darunterliegende transparente Zwischenfolien 12, 12'. Der gesamte Schichtaufbau wird in einem Laminierprozeß fest miteinander verbunden.

## Patentansprüche

1. Kartenförmiger tragbarer Datenträger (1), insbesondere elektronischer Datenträger wie Chipkarte oder dergleichen, umfassend zumindest eine Schicht (2) mit mindestens einer Aussparung (3; 3') welche zumindest teilweise mit einem für sichtbares Licht transluzenten Material (7; 7') befüllt ist, wobei das transluzente Material (7; 7') durch UV-und/ oder IR-Bestrahlung zur Lumineszenz anregbare Bestandteile umfaßt, wobei die zumindest eine Schicht (2) eine erste Schicht eines mehrschichtigen Schichtverbunds bildet, wobei mindestens eine zweite Schicht (5) auf einer ersten Oberfläche der ersten Schicht (2) angeordnet ist und zumindest im Bereich der mindestens einen Aussparung (3; 3') transluzent ist, und wobei zu einer, vorzugsweise zu jeder, Seite der ersten Schicht (2) zumindest eine opake Schicht (11, 11') vorhanden ist, die im Bereich der mindestens einen Aussparung (7) nicht opak ist, wobei der nicht-opake Bereich (11a, 11a') der opaken Schicht (11, 11') kleiner bemessen ist, wie die mindestens eine Aussparung (7) derart, daß die Randkante der mindestens einen Aussparung durch die opake Schicht (11, 11') verdeckt ist.

2. Datenträger nach Anspruch 1, **dadurch gekennzeichnet, daß** die zur Lumineszenz anregbaren Bestandteile im sichtbaren Spektralbereich emittieren.

3. Datenträger nach Anspruch 1 oder 2, **dadurch gekennzeichnet, daß** die mindestens eine Aussparung (3; 3') die zumindest eine Schicht (2) vollständig durchdringt.

4. Datenträger nach einem der Ansprüche 1 bis 3, **dadurch gekennzeichnet, daß** das transluzente Material (7; 7') zur Laserbeschriftung geeignete lasersensible Stoffe umfaßt.

5. Datenträger nach Anspruch 4, **dadurch gekennzeichnet, daß** die zumindest eine Schicht (2) bei Betrachtung im Durchlicht opak ist.

6. Datenträger nach einem der vorhergehenden Ansprüche, **gekennzeichnet durch** mindestens eine dritte Schicht (9) auf einer der ersten Oberfläche gegenüberliegenden zweiten Oberfläche der ersten Schicht (2), wobei die dritte Schicht zumindest im Bereich der mindestens einen Aussparung (7; 7') transluzent ist.

7. Datenträger nach einem der Ansprüche 1 bis 6, **dadurch gekennzeichnet, daß** das transluzente Material (7, 7') strahlungsgehärtet ist.

8. Datenträger nach einem der Ansprüche 1 bis 7, **dadurch gekennzeichnet, daß** in dem Datenträger ein oder mehrere elektronische Bauelemente aufgenommen sind.

9. Datenträger nach einem der Ansprüche 1 bis 8, **dadurch gekennzeichnet, daß** das transluzente Material (7') zur Laserbeschriftung geeignete lasersensible Additive umfaßt.

10. Datenträger nach einem der Ansprüche 1 bis 9, **dadurch gekennzeichnet, daß** die mindestens eine Aussparung (3) ein graphisches Muster (4), insbesondere in Form alphanumerischer Zeichen, bildet.

11. Verfahren zum Herstellen eines kartenförmigen tragbaren Datenträgers (1), insbesondere elektronischen Datenträgers wie Chipkarte und dergleichen, umfassend die Schritte:
- zur Verfügung stellen eines schichtartigen Substrats (2),
- Erzeugen von mindestens einer Aussparung (3; 3') in dem schichtartigen Substrat (2) und
- zumindest teilweises Befüllen der Aussparung (3; 3') mit transluzentem Material (7; 7'), welches durch Strahlung außerhalb des sichtbaren Spektrums, insbesondere durch NUV- und/oder NIR-Strahlung, zur Lumineszenz anregbare Bestandteile umfaßt, wobei die zumindest eine Schicht (2) eine erste Schicht eines mehrschichtigen Schichtverbunds bildet, wobei mindestens eine zweite Schicht (5) auf einer ersten Oberfläche der ersten Schicht (2) angeordnet ist und zumindest im Bereich der mindestens einen Aussparung (3, 3') transluzent ist, und wobei zu einer, vorzugsweise zu jeder, Seite der ersten Schicht (2) zumindest eine opake Schicht (11, 11') vorhanden ist, die im Bereich der mindestens einen Aussparung (7) nicht opak ist, wobei der nicht-opake Bereich (11a, 11a') der opaken Schicht (11, 11')kleiner bemessen ist, wie die mindestens eine Aussparung (7) derart, daß die Randkante der mindestens einen Aussparung durch die opake Schicht (11,11') verdeckt ist.

12. Verfahren nach Anspruch 11, **dadurch gekennzeichnet, daß** die Aussparung (3; 3') in dem Substrat (2) als das Substrat (2) durchdringende Aussparung erzeugt wird und das Substrat (2) vor dem Schritt des Befüllens derart mit einer Folie (5) hinterlegt wird, daß die Folie (5) im Bereich der Aussparung (3; 3') einen Boden (6, 6') zum Befüllen der Aussparung mit dem transluzenten Material (7; 7') bildet.

13. Verfahren nach Anspruch 11 oder 12, **gekennzeichnet durch** den Schritt des Härtens des in die Aussparung (3; 3') gefüllten transluzenten Materials (7; 7') **durch** Bestrahlen.

14. Verfahren nach einem der Ansprüche 11 bis 13, **gekennzeichnet durch** den weiteren Schritt des Laminierens des Substrats (2) und etwaiger weiterer Folien (5) mit einer die Aussparung (3; 3') überdeckenden, zumindest im Bereich der Aussparung (3; 3') transluzenten Deckfolie (9).

15. Verfahren nach einem der Ansprüche 11 bis 14, **dadurch gekennzeichnet, daß** die mindestens eine Aussparung (3) als graphisches Muster (4), insbesondere in Form alphanumerischer Zeichen, erzeugt wird.

16. Verfahren nach einem der Ansprüche 11 bis 15, **gekennzeichnet durch** den weiteren Schritt des Beschriftens des transluzenten Materials (7') durch selektive Bestrahlung mittels Laserstrahlung.

## Claims

1. A card-shaped portable data carrier (1), in particular electronic data carrier such as chip card or the like, comprising at least one layer (2) with at least one gap (3; 3') which is filled at least partly with a material (7; 7') that is translucent to visible light, wherein the translucent material (7; 7') comprises constituents that are excitable to luminesce by UV and/or IR irradiation, wherein the at least one layer (2) forms a first layer of a multilayered layer composite, wherein at least a second layer (5) is arranged on a first surface of the first layer (2) and is translucent at least in the area of the at least one gap (3; 3'), and wherein on one, preferably on each, side of the first layer (2) there is present at least one opaque layer (11, 11') which is non-opaque in the area of the at least one gap (7), wherein the non-opaque area (11a, 11a') of the opaque layer (11, 11') is dimensioned to be smaller than the at least one gap (7) such that the marginal edge of the at least one gap is hidden by the opaque layer (11, 11').

2. The data carrier according to claim 1, **characterized in that** the constituents excitable to luminesce emit in the visible spectral region.

3. The data carrier according to claim 1 or 2, **characterized in that** the at least one gap (3; 3') completely penetrates the at least one layer (2).

4. The data carrier according to any of claims 1 to 3, **characterized in that** the translucent material (7; 7') comprises laser-sensitive substances suitable for laser inscription.

5. The data carrier according to claim 4, **characterized in that** the at least one layer (2) is opaque upon viewing in transmitted light.

6. The data carrier according to any of the preceding claims, **characterized by** at least a third layer (9) on a second surface, opposing the first surface, of the first layer (2), wherein the third layer is translucent at least in the area of the at least one gap (7; 7').

7. The data carrier according to any of claims 1 to 6, **characterized in that** the translucent material (7, 7') is radiation-cured.

8. The data carrier according to any of claims 1 to 7, **characterized in that** one or several electronic components are received in the data carrier.

9. The data carrier according to any of claims 1 to 8, **characterized in that** the translucent material (7') comprises laser-sensitive additives suitable for laser inscription.

10. The data carrier according to any of claims 1 to 9, **characterized in that** the at least one gap (3) forms a graphical pattern (4), in particular in the form of alphanumeric characters.

11. A method for producing a card-shaped portable data carrier (1), in particular electronic data carrier such as chip card and the like, comprising the steps of:
- providing a layer-like substrate (2),
- producing at least one gap (3; 3') in the layer-like substrate (2), and
- at least partly filling the gap (3; 3') with translucent material (7; 7') which comprises constituents that are excitable to luminesce by radiation outside the visible spectrum, in particular by NUV and/or NIR radiation, wherein the at least one layer (2) forms a first layer of a multilayered layer composite, wherein at least a second layer (5) is arranged on a first surface of the first layer (2) and is translucent at least in the area of the at least one gap (3; 3'), and wherein on one, preferably on each, side of the first layer (2) there is present at least one opaque layer (11, 11') which is non-opaque in the area of the at least one gap (7), wherein the non-opaque area (11a, 11a') of the opaque layer (11, 11') is dimensioned to be smaller than the at least one gap (7) such that the marginal edge of the at least one gap is hidden by the opaque layer (11, 11').

12. The method according to claim 11, **characterized in that** the gap (3; 3') is produced in the substrate (2) as a gap penetrating the substrate (2), and the substrate (2) is backed with a foil (5) before the filling step such that the foil (5) forms in the area of the gap (3; 3') a bottom (6, 6') for filling the gap with the translucent material (7; 7').

13. The method according to claim 11 or 12, **characterized by** the step of curing by irradiation the translucent material (7; 7') filled into the gap (3; 3').

14. The method according to any of claims 11 to 13, **characterized by** the further step of laminating the substrate (2) and any further foils (5) with a cover foil (9) that covers the gap (3; 3') and is translucent at least in the area of the gap (3; 3').

15. The method according to any of claims 11 to 14, **characterized in that** the at least one gap (3) is produced as a graphical pattern (4), in particular in the form of alphanumeric characters.

16. The method according to any of claims 11 to 15, **characterized by** the further step of inscribing the translucent material (7') by selective irradiation by means of laser radiation.

## Revendications

1. Support de données portable (1) en forme de carte, notamment support de données électronique tel que carte à puce ou objet similaire, comprenant au moins une couche (2) comportant au moins un évidement (3; 3') rempli au moins partiellement d'un matériau (7; 7') translucide pour la lumière visible, le matériau (7; 7') translucide renfermant des constituants excitables par irradiation UV et/ou IR de manière à devenir luminescents, la au moins une couche (2) constituant une première couche d'un composite feuilleté à plusieurs couches, au moins une deuxième couche (5) étant agencée sur une première surface de la première couche (2) et étant translucide au moins dans la zone du au moins un évidement (3; 3'), et cependant que d'un côté, de préférence de chaque côté de la première couche (2), il y a au moins une couche opaque (11, 11') qui n'est pas opaque dans la zone du au moins un évidement (7), la zone non opaque (11a, 11a') de la couche opaque (11, 11') ayant de telle manière des dimensions inférieures à celles du au moins un évidement (7) que l'arête marginale du au moins un évidement est masquée par la couche opaque (11, 11').

2. Support de données selon la revendication 1, **caractérisé en ce que** les constituants excitables de manière à devenir luminescents émettent dans la plage spectrale visible.

3. Support de données selon la revendication 1 ou 2, **caractérisé en ce que** le au moins un évidement (3; 3') traverse entièrement la au moins une couche (2).

4. Support de données selon une des revendications de 1 à 3, **caractérisé en ce que** le matériau (7; 7') translucide renferme des substances sensibles au laser appropriées au marquage au laser.

5. Support de données selon la revendication 4, **caractérisé en ce que** la au moins une couche (2) est opaque lors d'une observation en lumière traversante.

6. Support de données selon une des revendications précédentes, **caractérisé par** au moins une troisième couche (9) sur une seconde surface agencée de manière opposée à la première surface et appartenant à la première couche (2), la troisième couche étant translucide au moins dans la zone du au moins un évidement (7; 7').

7. Support de données selon une des revendications de 1 à 6, **caractérisé en ce que** le matériau (7, 7') translucide est durci par rayonnement.

8. Support de données selon une des revendications de 1 à 7, **caractérisé en ce qu**'un ou plusieurs composants électroniques sont hébergés dans le support de données.

9. Support de données selon une des revendications de 1 à 8, **caractérisé en ce que** le matériau (7') translucide renferme des additifs sensibles au laser appropriés au marquage au laser.

10. Support de données selon une des revendications de 1 à 9, **caractérisé en ce que** le au moins un évidement (3) constitue un motif graphique (4), notamment sous forme de signes alphanumériques.

11. Procédé de fabrication d'un support de données portable (1) en forme de carte, notamment d'un support de données électronique tel que carte à puce ou objet similaire, comprenant les étapes:
- mise à disposition d'un substrat (2) stratifié,
- génération d'au moins un évidement (3; 3') dans le substrat (2) stratifié et
- remplissage au moins partiel de l'évidement (3; 3') avec du matériau (7; 7') translucide qui renferme des constituants excitables de manière à devenir luminescents par irradiation extérieure au spectre visible, notamment par irradiation proche UV et/ou proche IR, la moins une couche (2) constituant une première couche d'un composite feuilleté à plusieurs couches, au moins une seconde couche (5) étant agencée sur une première surface de la première couche (2) et étant translucide au moins dans la zone du au moins un évidement (3; 3'), et cependant que d'un côté, de préférence de chaque côté de la première couche (2), il y a au moins une couche opaque (11, 11') qui n'est pas opaque dans la zone du au moins un évidement (7), la zone non opaque (11a, 11a') de la couche opaque (11, 11') ayant de telle manière des dimensions inférieures à celles du au moins un évidement (7) que l'arête marginale du au moins un évidement est masquée par la couche opaque (11, 11').

12. Procédé selon la revendication 11, **caractérisé en ce que** l'évidement (3; 3') dans le substrat (2) est généré en tant qu'évidement traversant le substrat (2) et **en ce que** le substrat (2) est chemisé de telle manière avec un film (5) avant l'étape du remplissage que le film (5) constitue dans la zone l'évidement (3; 3') un fond (6, 6') servant à remplir l'évidement avec le matériau (7; 7') translucide.

13. Procédé selon la revendication 11 ou 12, **caractérisé par** l'étape du durcissement par irradiation du matériau (7; 7') translucide empli dans l'évidement (3; 3').

14. Procédé selon une des revendications de 11 à 13, **caractérisé par** l'étape supplémentaire du laminage du substrat (2) et d'éventuels films supplémentaires (5) avec un film de recouvrement (9) recouvrant l'évidement (3; 3') et translucide au moins dans la zone l'évidement (3; 3').

15. Procédé selon une des revendications de 11 à 14, **caractérisé en ce que** le au moins un évidement (3) est généré en tant que motif graphique (4), notamment sous forme de signes alphanumériques.

16. Procédé selon une des revendications de 11 à 15, **caractérisé par** l'étape supplémentaire du marquage du matériau (7') translucide par irradiation sélective au moyen de rayonnement laser.
